# EUROPEAN PATENT APPLICATION

(11) **EP 2 392 616 A1**
(43) Date of publication of application: **07.12.2011**
(21) Application number: 09839253.3
(22) Date of filing: 13.11.2009
(51) Int. Cl.: C08L 23/00, C08F 2/44, C08F 4/64, C08K 5/20

(54) **POLYOLEFIN-BASED RESIN COMPOSITION FOR FOOD, MEDICAL, AND MUNICIPAL WATER PIPE APPLICATIONS**

(30) Priority: 28.01.2009 JP 2009017164; 05.11.2009 JP 2009254467
(71) Applicant: Adeka Corporation, Tokyo 116-0012 (JP)
(72) Inventor: AYABE Takashi, Saitama-shi Saitama 336-0022 (JP); OKAMOTO Kohei, Saitama-shi Saitama 336-0022 (JP); SEGUCHI Tetsuya, Saitama-shi Saitama 336-0022 (JP); KAWAMOTO Naoshi, Saitama-shi Saitama 336-0022 (JP)
(74) Representative: Jones, Helen M.M.
(86) International application number: PCT/JP2009/069328
(87) International publication number: WO 2010/087064

(57) **Abstract**

The present invention provides a stabilized polyolefin-based resin composition for use in food items, medical services and water service pipes, which has superior non-migratory and hygienic properties.

The polyolefin-based resin composition for use in food items, medical services and water service pipes according to the present invention comprises a polyolefin-based resin obtained by polymerization of an olefin-based monomer with an addition of a phenolic antioxidant represented by the following Formula (I): 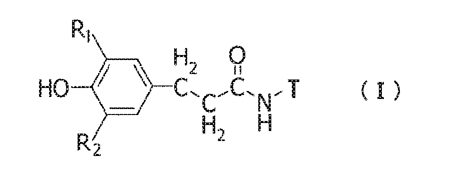 (wherein, R₁ and R₂ each independently represents, for example, a hydrogen atom; and T represents, for example, a C₁-C₃₀ alkyl group which is optionally branched and/or optionally has a cycloalkyl group)
which phenolic antioxidant is masked with an organic aluminum compound, to a catalyst system or polymerization system before or during the polymerization of the olefin-based monomer, in which polyolefin-based resin composition, the phenolic antioxidant represented by the above Formula (I) is added in an amount of 0.001 to 0.5 parts by mass with respect to 100 parts by mass of the aforementioned polyolefin-based monomer.

## Description

### TECHNICAL FIELD

The present invention relates to a polyolefin-based resin composition for use in food items, medical services and water service pipes. Particularly, the present invention relates to a polyolefin-based resin composition for use in food items, medical services and water service pipes, in which a specific phenolic antioxidant is added.

### BACKGROUND ART

Polyolefins are poorly stable against heat and light; therefore, they are easily oxidized and degraded during molding when the temperature becomes high and during use where they are exposed to heat and light, so that the required service life as a plastic article cannot be attained. Thus, in order to prevent such oxidation and degradation, stabilizers such as a phenolic antioxidant, phosphorus-based antioxidant, sulfur-based antioxidant, hydroxylamine compound, hindered amine compound, UV absorber and acid scavenger are commonly added, and polyolefins are being practically used by selecting and blending a variety of such stabilizers depending on the use thereof.

Polyolefins are advantageous in that they have superior moldability, heat-resistance, mechanical characteristics, low specific gravity and the like; therefore, they are widely used for films, sheets and a variety of molded articles (such as structural parts). There are a variety of characteristics that are desired for a polyolefin used in food items, medical services and water service pipes; however, since polyolefins used as a container or packaging material may come into direct contact with the subject matter, it is required that a stabilizer to be blended in such a polyolefin be non-migratory in particular and that a molded article of the polyolefin maintain hygienic properties.

The aforementioned term "non-migratory" means that a blended additive does not migrate from the inside to outside of a molded article. Further, in terms of the aforementioned hygienic properties, it is demanded that detoxicated blending of polyolefins be achieved by using an additive which satisfies the safety standards stated in, for example, the U.S. FDA standards (Food and Drug Administration) and the list prescribed by the Japan Hygienic Olefin and Styrene Plastics Association.

Examples of method of adding a stabilizer to a polyolefin include one in which a polyolefin-based resin obtained by polymerizing an olefin-based monomer is mixed with a stabilizer and the resultant is melt-kneaded by a processing machine such as an extruder so as to disperse the stabilizer in the polyolefin-based resin; and one in which a stabilizer is added before or during polymerization of an olefin-based monomer.

However, in such a method in which a polyolefin-based resin and a stabilizer are blended by melt-kneading, there is a problem that a more than necessary amount of stabilizer must be added in order to compensate poor dispersion of stabilizer per se in polyolefins.

Meanwhile, as a method in which a stabilizer is added before or during polymerization of an olefin-based monomer, for example, Patent Document 1 discloses a method in which polymerization of α-olefin is carried out in the presence of a phosphorus-based antioxidant. Patent Document 1 also indicates that, as compared to a polymer which was produced by adding an antioxidant to a polymerization product obtained by α-olefin polymerization without using a phosphorus-based antioxidant, a polymer obtained by polymerizing α-olefin in the presence of a phosphorus-based antioxidant attains superior stabilizing effect.

In addition, Patent Document 2 discloses that, by using a specific phosphorus-based antioxidant at the time of polymerization, a polymer having excellent color retention upon contact with water can be obtained without inhibiting the olefin polymerization.

Further, Patent Document 3 discloses that, since a phenolic antioxidant having an ester bond such as tetrakis(3-(3,5-di-tert-butyl-4-hydroxyphenyl)propionyloxymethyl)methane, which is a stabilizer widely used for polyolefins, reduces the catalytic activity of a polymerization catalyst, it is not suitable to be added before polymerization.

Furthermore, Patent Documents 4 and 5 discloses a method of producing a stabilized polymer in which a phenolic antioxidant masked with an organic aluminum compound is added before or during polymerization of a monomer having an ethylenic unsaturated bond.

### RELATED ART DOCUMENTS

### PATENT DOCUMENTS

Patent Document 1: Japanese Unexamined Patent Application Publication No. S63-92613
Patent Document 2: Japanese Unexamined Patent Application Publication No. H8-208731
Patent Document 3: Japanese Unexamined Patent Application Publication No. H5-271335
Patent Document 4: Japanese Unexamined Patent Application Publication No. 2006-52241
Patent Document 5: Japanese Unexamined Patent Application Publication No. 2006-282985

### SUMMARY OF THE INVENTION

### PROBLEMS TO BE SOLVED BY THE INVENTION

In this manner, a method in which a stabilizer is added before or during polymerization of an olefin-based monomer is advantageous in that the process of blending the stabilizer by melt-kneading such as extrusion after polymerization can be omitted; however, since it reduces the catalytic activity of a polymerization catalyst and causes coloration of the resulting polyolefin-based resin due to interaction between the stabilizer and catalyst metal, there is a problem that the selection and management of polymerization conditions become complicated. In addition, in the aforementioned Patent Documents relating to a method in which a stabilizer is added before or during polymerization of an olefin-based monomer, there is no description at all with regard to the non-extractability and hygienic properties of the resulting molded article.

Furthermore, due to the recent increase in environmental and health awareness, a resin molded article having superior non-migratory and hygienic properties is demanded. Therefore, an object of the present invention is to provide a stabilized polyolefin-based resin composition for use in food items, medical services and water service pipes, which has superior non-migratory and hygienic properties.

### MEANS FOR SOLVING THE PROBLEMS

In order to solve the above-described problems, the present inventors intensively studied to discover that the above-described object can be attained by polymerizing an olefin-based monomer with an addition of a specific phenolic antioxidant masked with an organic aluminum compound at the time of the polymerization, thereby completing the present invention.

That is, the polyolefin-based resin composition for use in food items, medical services and water service pipes according to the present invention comprises a polyolefin-based resin obtained by polymerization of an olefin-based monomer with an addition of a phenolic antioxidant represented by the following Formula (I): 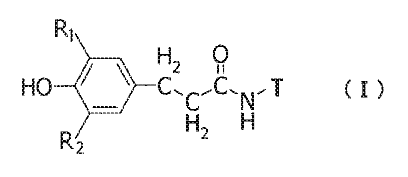 (wherein, R₁ and R₂ each independently represents a hydrogen atom, a C₁-C₅ alkyl group which is optionally branched or a C₇-C₉ phenylalkyl group; and T represents a C₁-C₃₀ alkyl group or C₂-C₃₀ alkenyl group which is optionally branched and/or optionally has a cycloalkyl group, a C₃-C₁₂ cycloalkyl group which is optionally substituted or a C₆-C₁₈ aryl group which is optionally substituted), which phenolic antioxidant is masked with an organic aluminum compound, to a catalyst system or polymerization system before or during the polymerization of the olefin-based monomer, in which polyolefin-based resin composition, the phenolic antioxidant represented by the above Formula (I) is added in an amount of 0.001 to 0.5 parts by mass with respect to 100 parts by mass of the aforementioned olefin-based monomer.

Further, in the polyolefin-based resin composition for use in food items, medical services and water service pipes according to the present invention, it is preferred that T in the aforementioned Formula (I) be a C₁₂-C₂₄ alkyl group which is optionally branched.

Further, in the polyolefin-based resin composition for use in food items, medical services and water service pipes according to the present invention, it is preferred that the aforementioned organic aluminum compound be trialkyl aluminum.

Still further, in the polyolefin-based resin composition for use in food items, medical services and water service pipes according to the present invention, it is preferred that the catalyst for the polymerization of the aforementioned olefin-based monomer be a transition-metal catalyst.

Further, in the polyolefin-based resin composition for use in food items, medical services and water service pipes according to the present invention, it is preferred that the aforementioned polymerization catalyst be a Ziegler-Natta type catalyst.

Further, in the polyolefin-based resin composition for use in food items, medical services and water service pipes according to the present invention, it is preferred that the ratio of the aforementioned phenolic antioxidant reflux-extracted using chloroform as solvent be not greater than 20% by mass with respect to the amount of the aforementioned phenolic antioxidant blended in the resin.

### EFFECT OF THE INVENTION

According to the present invention, a hygienically superior polyolefin-based resin composition for use in food items, medical services and water service pipes, in which migration of blended phenolic antioxidant to outside is suppressed, can be provided.

### MODES FOR CARRYING OUT THE INVENTION

The polyolefin-based resin composition for use in food items, medical services and water service pipes according to the present invention will now be described in detail.

The phenolic antioxidant used in the present invention is a compound represented by the following Formula (I): 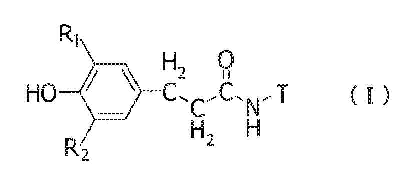 (wherein, R₁ and R₂ each independently represents a hydrogen atom, a C₁-C₅ alkyl group which is optionally branched or a C₇-C₉ phenylalkyl group; and T represents a C₁-C₃₀ alkyl group or C₂-C₃₀ alkenyl group which is optionally branched and/or optionally has a cycloalkyl group, a C₃-C₁₂ cycloalkyl group which is optionally substituted or a C₆-C₁₈ aryl group which is optionally substituted) and is used in an amount of 0.001 to 0.5 parts by mass, more preferably 0.005 to 0.3 parts by mass, with respect to 100 parts by mass of the olefin-based monomer.

Examples of the C₁-C₅ alkyl group which is optionally branched and represented by R₁ and R₂ in the aforementioned Formula (I) include methyl, ethyl, propyl, isopropyl, butyl, sec-butyl, tert-butyl, pentyl, sec-pentyl and tert-pentyl. In particular, tert-butyl group is preferably used since it gives a favorable stabilizing effect to the phenolic antioxidant.

Examples of the C₇-C₉ phenylalkyl group represented by R₁ and R₂ in the aforementioned Formula (I) include benzyl and 1-methyl-1-phenylethyl.

Examples of the C₁-C₃₀ alkyl group which is optionally branched and/or optionally has a cycloalkyl group, the C₁-C₃₀ alkyl group being represented by T in the aforementioned Formula (I), include methyl group, ethyl group, propyl group, isopropyl group, butyl group, sec-butyl group, tert-butyl group, isobutyl group, pentyl group, isopentyl group, tert-pentyl group, hexyl group, heptyl group, n-octyl group, isooctyl group, tert-octyl group, nonyl group, isononyl group, decyl group, undecyl group, dodecyl group, tridecyl group, tetradecyl group, pentadecyl group, hexadecyl group, heptadecyl group and octadecyl group; however, in the present invention, a C₁₂-C₂₄ alkyl group is particularly preferred. When the alkyl group has less than 12 carbon atoms, the phenolic antioxidant may become likely to be vaporized, while when the alkyl group has more than 24 carbon atoms, the ratio of phenol to the molecular weight of the phenolic antioxidant is decreased, so that the stabilizing effect may become reduced.

The aforementioned alkyl groups are also optionally interrupted by an oxygen atom, sulfur atom or the later-mentioned aryl group, and the hydrogen atom(s) in these alkyl groups is/are also optionally substituted by a hydroxy group, cyano group, alkenyl group, chain aliphatic group such as alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or cyclic aliphatic group such as cycloalkyl group. In addition, such interruption(s) or substitution(s) may also exist in combination.

Examples of the C₂-C₃₀ alkenyl group represented by T in the aforementioned Formula (I) include those alkenyl groups corresponding to the aforementioned alkyl groups, such as vinyl group, propenyl group, butenyl group, hexenyl group and oleyl group. Here, the C₂-C₃₀ alkenyl group may be either linear or branched, and the position of double bond is not particularly restricted as well.

The aforementioned alkenyl groups are also optionally interrupted by an oxygen atom, sulfur atom or the later-mentioned aryl group, and the hydrogen atom(s) in these alkenyl groups is/are also optionally substituted by a hydroxy group, cyano group, alkenyl group, chain aliphatic group such as alkenyloxy group, pyrrole, furan, thiophene, imidazole, oxazole, thiazole, pyrazole, isoxazole, isothiazole, pyridine, pyridazine, pyrimidine, pyrazine, piperidine, piperazine, morpholine, 2H-pyran, 4H-pyran, phenyl, biphenyl, triphenyl, naphthalene, anthracene, pyrrolidine, pyrindine, indolizine, indole, isoindole, indazole, purine, quinolizine, quinoline, isoquinoline or a cyclic aliphatic group such as cycloalkyl group.

Examples of the C₃-C₁₂ cycloalkyl group which is optionally substituted and represented by T in the aforementioned Formula (I) include cyclopropyl group, cyclopentyl group, cyclohexyl group, cycloheptyl group, cyclooctyl group, cyclononyl group and cyclodecyl group. The hydrogen atom(s) in these cycloalkyl groups is/are also optionally substituted by an alkyl group, alkenyl group, alkenyloxy group, hydroxy group or cyano group, and the alkyl group is also optionally interrupted by an oxygen atom or sulfur atom.

Examples of the C₆-C₁₈ aryl group which is optionally substituted and represented by T in the aforementioned Formula (I) include phenyl group, methylphenyl group, butylphenyl group, octylphenyl group, 4-hydroxyphenyl group, 3,4,5-trimethoxyphenyl group, 4-tert-butylphenyl group, biphenyl group, naphthyl group, methylnaphthyl group, anthracenyl group, phenanthryl group, benzylphenylethyl group and 1-phenyl-1-methylethyl group. Further, the hydrogen atom(s) in these aryl groups is/are also optionally substituted by an alkyl group, alkenyl group, alkenyloxy group, hydroxy group or cyano group, and the alkyl groups are also optionally interrupted by an oxygen atom or sulfur atom.

Examples of the specific structure of the phenolic antioxidant represented by the aforementioned Formula (I) include the following Compounds No. 1 to No. 16. However, the present invention is not restricted by the following compounds.

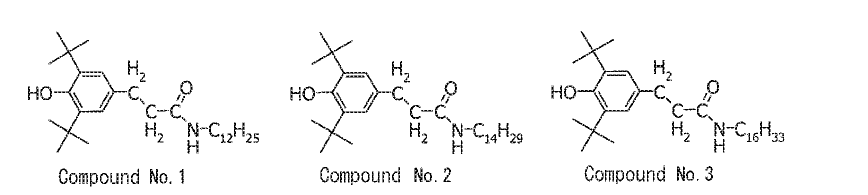

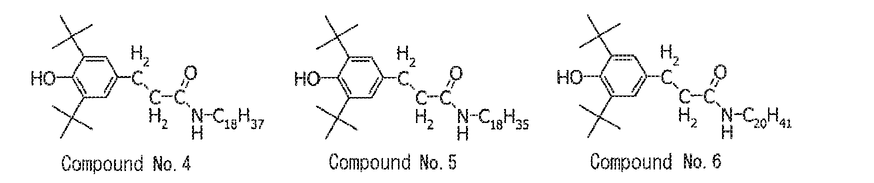

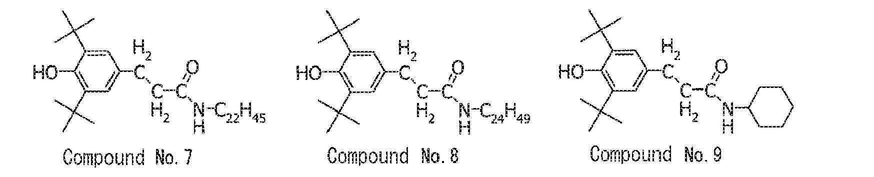

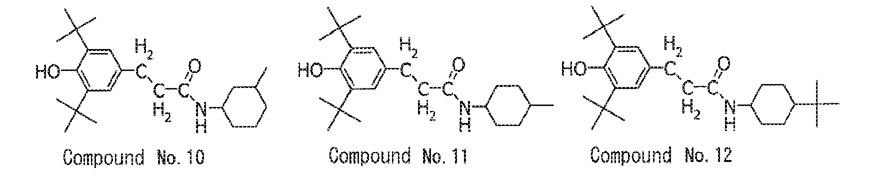

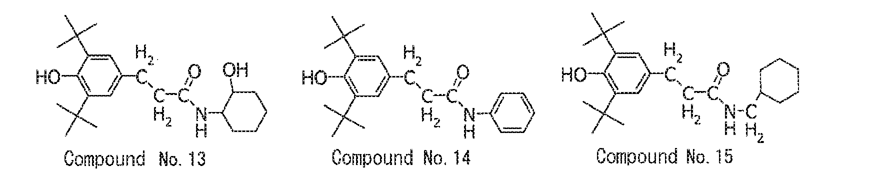

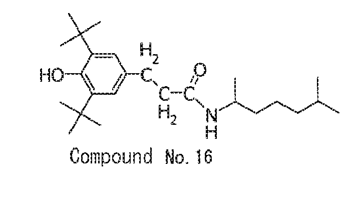

In the present invention, the term "phenolic antioxidant masked with an organic aluminum" represents a phenolic antioxidant in which a hydrogen of the phenolic hydroxyl group is substituted by an organic aluminum compound, the phenolic antioxidant being masked by treating with a hydrogen-donating compound such as water, an alcohol or acid in such a manner that the phenolic antioxidant can be regenerated to phenol. Among such phenolic antioxidants, those which can react with a deactivator used for catalyst deactivation in polymerization reaction to be regenerated to phenol is preferred, and particularly preferred is a phenolate (salt) which normally exists in a polymerization system where a polymerization catalyst for olefin-based resin is used and is obtained by a reaction between an organic aluminum compound not inhibiting polymerization and a phenolic antioxidant.

As the aforementioned organic aluminum compound, for example, alkyl aluminum or alkyl aluminum hydride may be used, and alkyl aluminum is preferred. Particularly preferred is a trialkyl aluminum and specific examples thereof include trimethyl aluminum, triethyl aluminum, tri-n-propyl aluminum, triisobutyl aluminum, tri-n-hexyl aluminum and tri-n-octyl aluminum. All of the aforementioned organic aluminum compounds may be used as a mixture. Further, an aluminoxane obtained by a reaction between alkyl aluminum or alkyl aluminum hydride and water may also be used in the same manner.

The aforementioned phenolic antioxidant may be masked simply by mixing and stirring a metal compound such as trialkyl aluminum and the phenolic antioxidant in an inert solvent. In the reaction by this method, in cases where a by-produced compound does not affect the polymerization product, the phenolic antioxidant may be used as it is; however, in cases where a by-produced compound inhibits the polymerization, it is preferred that the compound be removed by distillation under reduced pressure or the like before use.

Examples of the aforementioned inert solvent include aliphatic and aromatic hydrocarbon compounds. Examples of the aliphatic hydrocarbon compound include saturated hydrocarbon compounds such as n-pentane, n-hexane, n-heptane, n-octane, isooctane and purified kerosene; and cyclic saturated hydrocarbon compound such as cyclopentane, cyclohexane and cycloheptane, and examples of the aromatic hydrocarbon compound include compounds such as benzene, toluene, ethylbenzene and xylene. Among these compounds, n-hexane or n-heptane is preferably used. The concentration of trialkyl aluminum salt in the inert solvent is preferably in the range of 0.001 to 0.5 mol/L, particularly preferably 0.01 to 0.1 mol/L.

Examples of the olefin-based monomer used in the present invention include ethylene, propylene, 1-butene, 1-hexene, 3-methyl-1-butene, 3-methyl-1-pentene, 4-methyl-1-pentene, vinylcycloalkane, styrene and derivatives thereof.

Examples of the polymerization catalyst used in the present invention include compounds of a transition metal belonging to Group 3 to 11 of the Periodic Table (for example, titanium, zirconium, hafnium, vanadium, iron, nickel, lead, platinum, yttrium and samarium). Representative examples thereof include Ziegler-Natta catalysts comprising a titanium-containing solid transition metal component and an organic metal component; and metallocene catalysts comprising a transition metal compound, which has at least one cyclopentadienyl skeleton and belongs to Group 4 to 6 of the Periodic Table, and a co-catalyst component.

It is required that the polymerization of olefin-based monomer be carried out in an inert gas atmosphere such as nitrogen; however, it may also be carried out in the aforementioned inert solvent. Further, an active hydrogen compound, particulate carrier, organic aluminum compound, ion-exchanging layered compound and/or inorganic silicate may also be added in a range which does not inhibit the polymerization.

Polymerization of the olefin-based monomer can be carried out by, for example, a method in which an olefin-based monomer is polymerized to produce a polyolefin homopolymer by slurry polymerization, gas-phase polymerization, bulk polymerization, solution polymerization, a combination of these polymerization methods, one-step polymerization or multi-step polymerization; or a method in which a copolymer is produced by co-polymerizing propylene and at least one olefin (excluding propylene) unit selected from the group consisting of olefin units having 2 to 12 carbon atoms. Further, the polymerization can be carried out regardless of whether it is batch-type or continuous-type. At the end of the polymerization, the catalyst therefor can be degraded, for example, by adding water (water vapor) or an alcohol.

In the polyolefin-based resin composition for use in food items, medical services and water service pipes according to the present invention, other conventional additive(s) may be further blended as required. Examples of method of blending other additive(s) include a method in which the other additive(s) is/are mixed with the stabilized polyolefin-based resin composition according to the present invention in an amount suitable for the purpose thereof and the resultant is then granulated and molded by melt-kneading using a molding machine such as an extruder. Examples of the other additive(s) include phosphorus-based antioxidants, UV absorbers, hindered amine compounds, heavy metal inactivators, nucleating agents, flame retardants, metallic soaps, hydrotalcites, fillers, lubricants, antistatic agents, pigments, dyes and plasticizers. The phenolic antioxidant used in the present invention and other phenolic antioxidant(s) may also be further added to the polyolefin-based resin composition to be molded.

Since the polyolefin-based resin composition according to the present invention is used in medical services, food items and water service pipes, it is preferred that the aforementioned other additive(s) be selected from the compounds stated in the U.S. FDA standards or the list prescribed by the Japan Hygienic Olefin and Styrene Plastics Association.

Examples of the aforementioned phosphorus-based antioxidant include triphenyl phosphite, tris(nonylphenyl)phosphite, tris(2,4-di-tert-butylphenyl)phosphite, tris(2,4-di-tert-butyl-5-methylphenyl)phosphite, tris[2-tert-butyl-4-(3-tert-butyl-4-hydroxy-5-methylphenylthio)-5-methylphenyl]phosphite, tridecyl phosphite, octyl diphenyl phosphite, di(decyl)monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tir-tert-butylphenyl)pentaerythritol diphosphite, bis(2,4-dicumylphenyl)pentaerythritol diphosphite, tetra(tridecyl)isopropylidene diphenol diphosphite, tetra(tridecyl)-4,4'-n-butylidenebis(2-tert-butyl-5-methylphenol)diphosphite, hexa(tridecyl)-1,1,3-tris(2-methyl-4-hydroxy-5-tert-butylphenyl)butane triphosphite, tetrakis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl)fluorophosphite, tris(2-[(2,4,8,10-tetrakistert-butyldibenzo[d,f][1,3,2]dioxaphosphepin-6-yl)oxy]ethyl)amine and phosphites of 2-ethyl-2-butylpropylene glycol and 2,4,6-tri-tert-butylphenol. A phosphorus-based antioxidant which does not adversely affect polymerization even if added before the polymerization, such as tris(2,4-di-tert-butylphenyl)phosphite, is preferred.

The aforementioned phosphorus-based antioxidant is used in an amount of 0.001 to 3 parts by mass, more preferably 0.005 to 0.5 parts by mass, with respect to 100 parts by mass of the aforementioned polyolefin-based resin.

Examples of the aforementioned UV absorber include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2-hydroxyphenyl)benzotriazoles such as 2-(2-hydroxy-5-methylphenyl)benzotriazole, 2-(2-hydroxy-5-tert-octylphenyl)benzotriazole, 2-(2-hydroxy-3,5-di-tert-butylphenyl)-5-chlorobenzotriazole, 2-(2-hydroxy-3-tert-butyl-5-methylphenyl)-5-chlorobenzotriazole, 2-(2-hydroxy-3,5-dicumylphenyl)benzotriazole, 2,2'-methylenebis(4-tert-octyl-6-benzotriazorylphenol), polyethylene glycol ester of 2-(2-hydroxy-3-tert-butyl-5-carboxyphenyl)benzotriazole, 2-[2-hydroxy-3-(2-acryloyloxyethyl)-5-methylphenyl]benzotriazole, 2-[2-hydroxy-3-(2-methacryloyloxyethyl)-5-tert-butylphenyl]benzotriazole, 2-[2-hydroxy-3-(2-methacryloyloxyethyl)-5-tert-octylphenyl]benzotriazole, 2-[2-hydroxy-3-(2-methacryloyloxyethyl)-5-tert-butylphenyl]-5-chlorobenzotriazole, 2-[2-hydroxy-5-(2-methacryloyloxyethyl)phenyl]benzotriazole, 2-[2-hydroxy-3-tert-butyl-5-(2-methacryloyloxyethyl)phenyl]benzotriazole, 2-[2-hydroxy-3-tert-amyl-5-(2-methacryloyloxyethyl)phenyl]benzotriazole, 2-[2-hydroxy-3-tert-butyl-5-(3-methacryloyloxypropyl)phenyl]-5-chlorobenzotriazole, 2-[2-hydroxy-4-(2-methacryloyloxymethyl)phenyl]benzotriazole, 2-[2-hydroxy-4-(3-methacryloyloxy-2-hydroxypropyl)phenyl]benzotriazole and 2-[2-hydroxy-4-(3-methacryloyloxypropyl)phenyl]benzotriazole; 2-(2-hydroxyphenyl)-4,6-diaryl-1,3,5-triazines such as 2-(2-hydroxy-4-methoxyphenyl)-4,6-diphenyl-1,3,5-triazine, 2-(2-hydroxy-4-hexyloxyphenyl)-4,6-diphenyl-1,3,5-triazine, 2-(2-hydroxy-4-octoxyphenyl)-4,6-bis(2,4-dimethylphenyl)-1,3,5-triazine, 2-[2-hydroxy-4-(3-C₁₂₋₁₃ mixed alkoxy-2-hydroxypropoxy)phenyl]-4,6-bis(2,4-dimethylphenyl)-1,3,5-triazine, 2-[2-hydroxy-4-(2-acryloyloxyethoxy)phenyl]-4,6-bis(4-methylphenyl)-1,3,5-triazine, 2-(2,4-dihydroxy-3-allylphenyl)-4,6-bis(2,4-dimethylphenyl)-1,3,5-triazine and 2,4,6-tris(2-hydroxy-3-methyl-4-hexyloxyphenyl)-1,3,5-triazine; benzoates such as phenyl salicylate, resorcinol monobenzoate, 2,4-di-tert-butylphenyl-3,5-di-tert-butyl-4-hydroxybenzoate, octyl(3,5-di-tert-butyl-4-hydroxy)benzoate, dodecyl(3,5-di-tert-butyl-4-hydroxy)benzoate, tetradecyl(3,5-di-tert-butyl-4-hydroxy)benzoate, hexadecyl(3,5-di-tert-butyl-4-hydroxy)benzoate, octadecyl(3,5-di-tert-butyl-4-hydroxy)benzoate and behenyl(3,5-di-tert-butyl-4-hydroxy)benzoate; substituted oxanilides such as 2-ethyl-2'-ethoxyoxanilide and 2-ethoxy-4'-dodecyloxanilide; cyanoacrylates such as ethyl-α-cyano-β,β-diphenylacrylate and methyl-2-cyano-3-methyl-3-(p-methoxyphenyl)acrylate; and various metal salts and metal chelates, particularly salts and chelates of nickel and chromium.

The aforementioned UV absorber is used in an amount of 0.001 to 5 parts by mass, more preferably 0.005 to 0.5 parts by mass, with respect to 100 parts by mass of the aforementioned polyolefin-based resin.

Examples of the aforementioned hindered amine-based light stabilizer include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl)sebacate, tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, bis(2,2,6,6-tetramethyl-4-piperidyl)·di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,4,4-pentamethyl-4-piperidyl)-2-butyl-2-(3,5-di-tert-butyl-4-hydroxybenzyl)malonate, 1-(2-hydroxyethyl)-2,2,6,6-tetramethyl-4-piperidinol/diethyl succinate polycondensate, 1,6-bis(2,2,6,6-tetramethyl-4-piperidylamino)hexane/2,4-dichloro-6-morpholino-s-triazine polycondensate, 1,6-bis(2,2,6,6-tetramethyl-4-piperidylamino)hexane/2,4-dichloro-6-tert-octylamino-s-triazine polycondensate, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(l,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl]aminoundecane, 1,6,11-tris[2,4-bis(N-butyl-N-(1,2,2,6,6-pentamethyl-4-piperidyl)amino)-s-triazine-6-yl]aminoundecane, bis{4-(1-octyloxy-2,2,6,6-tetramethyl)piperidyl}decanedionate, bis{4-(2,2,6,6-tetramethyl-1-undecyloxy)piperidyl} carbonate and TINUVIN NOR 371 manufactured by Ciba Specialty Chemicals Corporation.

The aforementioned hindered amine-based light stabilizer is used in an amount of 0.001 to 5 parts by mass, more preferably 0.005 to 0.5 parts by mass, with respect to 100 parts by mass of the aforementioned polyolefin-based resin.

Examples of the aforementioned nucleating agent include metal carboxylates such as sodium benzoate, 4-tert-butyl aluminum benzoate, sodium adipate and 2-sodium-bicyclo[2.2.1]heptane-2,3-dicarboxylate; metal phosphates such as sodium-bis(4-tert-butylphenyl)phosphate, sodium-2,2'-methylenebis(4,6-di-tert-butylphenyl)phosphate and lithium-2,2'-methylenebis(4,6-di-tert-butylphenyl)phosphate; polyalcohol derivatives such as dibenzylidene sorbitol, bis(methylbenzylidene)sorbitol, bis(p-ethylbenzylidene)sorbitol and bis(dimethylbenzylidene)sorbitol; and amide compounds such as N,N',N"-tris[2-methylcyclohexyl]-1,2,3-propane tricarboxyamide, N,N',N"-tricyclohexyl-1,3,5-benzene tricarboxyamide, N,N'-dicyclohexyl-naphthalene dicarboxyamide and 1,3,5-tri(dimethylisopropoylamino)benzene.

The aforementioned nucleating agent is used in an amount of 0.001 to 10 parts by mass, more preferably 0.005 to 5 parts by mass, with respect to 100 parts by mass of the aforementioned polyolefin-based resin.

Examples of the aforementioned flame retardant include aromatic phosphates such as triphenyl phosphate, tricresyl phosphate, trixylenyl phosphate, cresyldiphenyl phosphate, cresyl-2,6-xylenyl phosphate and resorcinol bis(diphenylphosphate); phosphates such as divinyl phenyl phosphate, diallylphenyl phosphate and (1-butenyl)phenyl phosphate; phosphinates such as diphenyl phenyl phosphinate, diphenyl methyl phosphinate and 9,10-dihydro-9-oxa-10-phosphaphenanthlene-10-oxide derivative; phosphazene compounds such as bis(2-allylphenoxy)phosphazene and dicresylphosphazene; phosphorus-based flame retardants such as melamine phosphate, melamine pyrophosphate, melamine polyphosphate, melam polyphosphate, ammonium polyphosphate, phosphorus-containing vinylbenzyl compounds and red phosphorus; metal hydroxides such as magnesium hydroxide and aluminum hydroxide; and bromine-based flame retardants such as brominated bisphenol Type A epoxy resin, brominated phenol novolac-type epoxy resin, hexabromobenzene, pentabromotoluene, ethylenebis(pentabromophenyl), ethylenebis-tetrabromophthalimide, 1,2-dibromo-4-(1,2-dibromoethyl)cyclohexane, tetrabromocyclooctane, hexabromocyclododecane, bis(tribromophenoxy)ethane, brominated polyphenylene ether, brominated polystyrene, 2,4,6-tris(tribromophenoxy)-1,3,5-triazine, tribromophenyl maleimide, tribromophenyl acrylate, tribromophenyl methacrylate, tetrabromo bisphenol Type A dimethacrylate, pentabromobenzyl acrylate and brominated styrene.

The aforementioned flame retardant is used in an amount of 1 to 70 parts by mass, more preferably 10 to 30 parts by mass, with respect to 100 parts by mass of the aforementioned polyolefin-based resin.

Examples of the aforementioned other phenolic antioxidant(s) include 2,6-di-tert-butyl-p-cresol, 2,6-diphenyl-4-octadesiloxyphenol, stearyl(3,5-di-tert-butyl-4-hydroxyphenyl)propionate, distearyl(3,5-di-tert-butyl-4-hydroxybenzyl)phosphonate, tridecyl-3,5-di-tert-butyl-4-hydroxybenzyl thioacetate, thiodiethylenebis[(3,5-di-tert-butyl-4-hydroxyphenyl)propionate], 4,4'-thiobis(6-tert-butyl-m-cresol), 2-octylthio-4,6-di(3,5-di-tert-butyl-4-hydroxyphenoxy)-s-triazine, 2,2'-methylenebis(4-methyl-6-tert-butylphenol), bis[3,3-bis(4-hydroxy-3-tert-butylphenyl)butylic acid]glycol ester, 4,4'-butylidenebis(2,6-di-tert-butylphenol), 4,4'-butylidenebis(6-tert-butyl-3-methylphenol), 2,2'-ethylidenebis(4,6-di-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl]terephthalate, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl]isocyanurate, tetrakis[methylene-3-(3',5'-di-tert-butyl-4'-hydroxyphenyl)propionate]methane, 2-tert-butyl-4-methyl-6-(2-acroyloxy-3-tert-butyl-5-methylbenzyl)phenol, 3,9-bis[2-(3-tert-butyl-4-hydroxy-5-methylhydrocinnamoyloxy)-1, 1-dimethylethyl]-2,4,8,10-tetraoxaspiro[5.5]undecane and triethylene glycolbis[β-(3-tert-butyl-4-hydroxy-5-methylphenyl)propionate].

The aforementioned other phenolic antioxidant(s) is/are used in an amount of 0.001 to 10 parts by mass, more preferably 0.01 to 5 parts by mass, with respect to 100 parts by mass of the aforementioned polyolefin-based resin.

The polyolefin-based resin composition for use in food items, medical services and water service pipes according to the present invention can be molded in the same manner as ordinary plastics by extrusion molding, injection molding, hollow molding, blow molding, vacuum molding, compression molding or the like. A variety of molded articles such as films, sheets, rods, bottles and containers can be easily obtained, and these can be used in food containers and packaging materials, medical tools such as syringe barrels, water service pipes and the like. In such cases, a polyolefin-based resin composition in which the ratio of the aforementioned phenolic antioxidant reflux-extracted using chloroform as solvent is not greater than 20% by mass with respect to the amount of the aforementioned phenolic antioxidant blended in the resin can be suitably used.

Here, the aforementioned ratio of the reflux-extracted phenolic antioxidant is calculated in accordance with the following procedures. First, 5 to 10 g of the polyolefin-based resin composition is pulverized to powders, and using 100 mL of chloroform as solvent, the resultant is reflux-extracted for 4 hours over a steam bath to be separated by filtration into a filtrate and residue. Next, the thus obtained residue is reflux-extracted for 4 hours with 100 mL of fresh chloroform to be separated by filtration into a filtrate and residue. The thus obtained two filtrates are combined and concentrated, and 100 mL of acetone is further added thereto. This mixture is heated to reflux over a steam bath for 1 hour and subsequently filtered to obtain a filtrate. The amount of phenolic antioxidant extracted into the thus obtained filtrate is quantified by gas chromatography and the ratio thereof (% by mass) is calculated with respect to the phenolic antioxidant blended in the resin.

### EXAMPLES

The present invention will now be described more concretely by way of Examples and Comparative Examples. However, the present invention is not restricted by these Examples or the like.

### (Example 1)

In accordance with the following procedures ([1] Preparation of catalyst slurry, [2] Preparation of stabilizer solution and [3] Polymerization of olefin-based monomer), a polyolefin-based resin composition was obtained.

### [1] Preparation of catalyst slurry

Anhydrous magnesium chloride (4.76 g, 50 mmol), 25 mL of decane and 23.4 mL (150 mmol) of 2-ethylhexyl alcohol were added and the resultant was allowed to react under heating at 130°C for 2 hours to obtain a uniform solution. Then, to the thus obtained uniform solution, 1.11 g (7.5 mmol) of phthalic anhydride was further added, and the resultant was stirred for 1 hour while maintaining the temperature thereof at 130°C to dissolve the phthalic anhydride in the uniform solution. Next, the thus obtained uniform solution was cooled to room temperature, and the entire amount thereof was added dropwise over a period of 1 hour into 200 mL (1.8 mol) of titanium tetrachloride maintained at -20°C. After the addition, the resultant was heated to 110°C over a period of 4 hours. After the temperature reached 110°C, 2.68 mL (12.5 mmol) of diisobutyl phthalate was added, and the resultant was allowed to react by stirring for 2 hours while maintaining the temperature thereof at 110°C. After the reaction, residue was collected by hot filtration. After resuspending the residue in 200 mL of titanium tetrachloride, the thus obtained suspension was allowed to react for 2 hours by heating it again to 110°C. After the reaction, the suspension was once again hot-filtered to collect residue, and the thus collected residue was sufficiently washed with 110°C decane and hexane until no free titanium compound was detected in the washing solution to obtain a solid titanium catalyst component. When a portion of this solid titanium catalyst component was sampled and dried and the catalyst composition was analyzed, the component contained 3.1% by mass of titanium, 56.0% by mass of chlorine, 17.0% by mass of magnesium and 20.9% by mass of isobutyl phthalate. To the solid titanium catalyst component synthesized by the above-described production method, heptane was added so as to obtain a 5 mg/mL heptane slurry to prepare a catalyst slurry.

### [2] Preparation of phenoxide solution

To a flask substituted with nitrogen, 3-(3,5-di-tert-butyl-4-hydroxyphenyl)-N-octadecylpropionamide (1.03 g, 1.94 mmol) and 65.5 mL of dry heptane were added. To the resultant, 3.0 mL (1 mol/L) of triethyl aluminum/heptane solution was dropped with stirring to prepare a phenoxide solution.

### [3] Polymerization of olefin-based monomer

To an autoclave substituted with nitrogen, 600 mL of dry heptane and 2.2 mL (1 mol/L) of triethyl aluminum/heptane solution were added. Further, 6.5 mL of the phenoxide solution prepared in the above-described [2], 4.1 mL of heptane solution in which 1.2 g (5.3 mmol) of dicyclopentyldimethoxy silane was dissolved in 100 mL of dry heptane by stirring and 4.0 mL of the catalyst slurry prepared in the above-described [1] were successively added. The autoclave was substituted with propylene atmosphere, and hydrogen (0.34 L; based on standard condition) was added thereto to carry out 5-minute pre-polymerization (600 rpm) at a propylene pressure of 0.098 MPa (G) and a temperature of 50°C. Then, polymerization reaction was performed for 1 hour at a propylene pressure of 0.59 MPa and a temperature of 70°C. After purging the gas, 5 mL of ethanol was added to the reaction solution, which was then stirred for 5 minutes to stop the polymerization reaction. Thereafter, the solvent was removed under reduced pressure and the resultant was dried at 40°C for 10 hours in vacuum to obtain a polyolefin-based resin composition.

### (Comparative Example 1)

A polyolefin-based resin composition was obtained in the same manner as in [3] of Example 1, except that 6.7 mL of phosphite solution described below was used in place of 6.5 mL of the phenoxide solution.

### (Preparation of phosphite solution)

To a flask substituted with nitrogen, 0.9 g (1.4 mmol) of tris(2,4-di-tert-butylphenyl)phosphite and 30 mL of dry heptane were added and stirred to prepare a phosphite solution.

### (Comparative Example 2)

A polyolefin-based resin was obtained by performing polymerization in the same manner as in the above-described [3] of Example 1, except that the 6.5 mL of the phenoxide solution was not used. Then, 3-(3,5-di-tert-butyl-4-hydroxyphenyl)-N-octadecylpropionamide was mixed with the thus obtained polyolefin-based resin in an amount of 500 ppm, and the resultant was granulated using an uniaxial extruder (machine: Plastomill µ manufactured by Toyo Seiki Seisaku-sho, Ltd.; extrusion temperature: 230°C; screw rotational speed: 50 rpm) to obtain a pellet.

For the polyolefin-based resins and pellet obtained by the above-described methods, the non-migratory property of the stabilizer in the polyolefin resins was evaluated in accordance with the method described below. Here, chloroform is a specified non-medical deleterious substance and, therefore, it is not commonly used in a polyolefin-based resin composition for use in food items, medical services and water service pipes; however, since polyolefins are relatively stable compounds and contain a small amount of stabilizer(s), under normal use conditions, it is difficult to quantitatively evaluate the non-migratory property of a stabilizer in a polyolefin resin. Therefore, in the present invention, by temporarily swelling the polyolefins with chloroform, the inventors tried to quantitatively evaluate the non-migratory property of the stabilizer in the polyolefin resin compositions. The results thereof are shown in Table 1 below.

### (Non-migratory property)

The polyolefin-based resin compositions or pellet obtained in the above was frozen using dry ice and then pulverized for 1 hour by a roller mill (HEIKO SAMPLE MILL T1-500ET; manufactured by HEICO Seisakusho Ltd.). To the thus pulverized 5 to 10 g of the polyolefin-based resin, 100 mL of chloroform was added, and extraction was carried out for 4 hours over a steam bath while heating the mixture to reflux. After the extraction, the resultant was separated by filtration to collect a filtrate, and the resulting filtration residue was added with 100 mL of fresh chloroform and once again extracted for 4 hours over a steam bath while heating the mixture to reflux. After the extraction, the resultant was separated by filtration, and the chloroform solvent of the thus obtained filtrate and the chloroform solvent of the filtrate obtained in the previous extraction were combined and concentrated. The resulting mixture was further added with 100 mL of acetone and heated to reflux for 1 hour over a steam bath. After allowing the resultant to cool to room temperature, it was separated by filtration, and the thus obtained filtrate was concentrated and diluted to an amount of 10 mL with chloroform.

Next, by gas chromatography (apparatus: gas chromatography GC 2010 manufactured by Shimazu Corporation; column: BPX5 (30 m x 0.25mm ID x 0.25 µm) manufactured by SGE; injection temperature: 300°C; detector temperature: 320°C; measurement condition: heating rate at 15°C/min), a calibration curve was prepared using the stabilizers stated in Table 1 which were dissolved in chloroform, and the stabilizers extracted from the polyolefin-based resin composition were quantified. The results thereof are shown in Table 1.

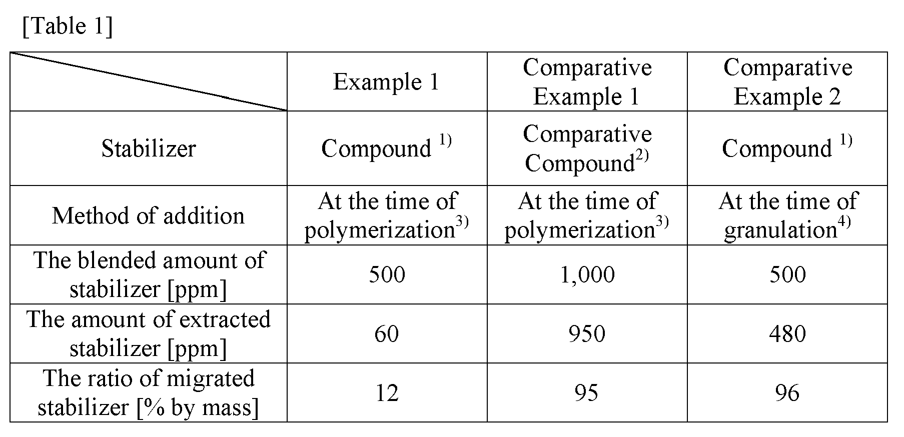

According to Comparative Example 1, from the polyolefin-based resin composition obtained by polymerization with an addition of the phosphorus-based antioxidant as a stabilizer, the majority (95% by mass) of the blended stabilizer could be extracted. In addition, according to Comparative Example 2, in the case where the polyolefin-based resin obtained by polymerization without addition of the phenolic antioxidant masked with an organic aluminum compound as a stabilizer, in which polyolefin-based resin the phenolic antioxidant masked with an organic aluminum compound was blended after the polymerization, was granulated by an extruder, almost the entire amount (96% by mass) of the blended phenolic antioxidant could be extracted. In contrast to these, according to Example 1, from the polyolefin-based resin composition according to the present invention, only 12% by mass of the blended phenolic antioxidant masked with an organic aluminum compound could be extracted.

The nitrogen contained in the polyolefin-based resin composition of Example 1 is originated from the phenolic antioxidant, which is the stabilizer; therefore, by determining the total nitrogen content in the polyolefin-based resin composition, the content of the stabilizer blended in the polyolefin-based resin composition can be determined. The total nitrogen content was determined in accordance with the method described below to calculate the content of the stabilizer in the polyolefin-based resin composition. The results thereof are shown in Table 2 below.

### (Measurement of the total nitrogen content)

The polyolefin-based resin composition obtained in Example 1 was collected in an amount of 10 mg and the total nitrogen content thereof was measured using a total nitrogen microanalyzer (TN-110; manufactured by Mitsubishi Chemical Corporation). A calibration curve was prepared using xylene in which pyridine was dissolved.

**[Table 2]**

| Stabilizer | Compound¹⁾ |
|---|---|
| Method of addition | At the time of polymerization³⁾ |
| The blended amount of stabilizer [ppm] | 500 |
| The amount of extracted stabilizer [ppm] | 510 |

The content of the stabilizer in the polyolefin-based resin composition calculated from the total nitrogen content was within experimental error and found to be the total amount of the blended stabilizer; therefore, it was confirmed that, in the polyolefin-based resin composition according to the present invention, the blended phenolic antioxidant is not likely to be extracted.

From the above, in the polyolefin-based resin composition according to the present invention, it was confirmed that, by adding and blending, as a stabilizer, a specific phenolic antioxidant masked with an organic aluminum compound to a catalyst system or polymerization system before or during polymerization of an olefin-based monomer, the migration of the stabilizer from the polyolefin-based resin can be considerably suppressed. In this manner, the olefin-based resin composition according to the present invention has particularly superior non-migratory and hygienic properties; therefore, it is extremely useful for applications in food items, medical services and water service pipes where it is required that the blended additive(s) do not migrate.

## Claims

1. A polyolefin-based resin composition for use in food items, medical services and water service pipes, which comprises a polyolefin-based resin obtained by polymerization of an olefin-based monomer with an addition of a phenolic antioxidant represented by the following Formula (I): 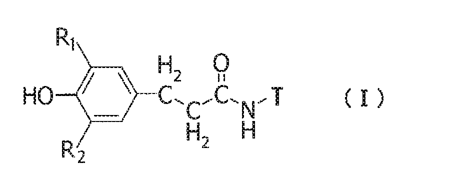 (wherein, R₁ and R₂ each independently represents a hydrogen atom, a C₁-C₅ alkyl group which is optionally branched or a C₇-C₉ phenylalkyl group; and T represents a C₁-C₃₀ alkyl group or C₂-C₃₀ alkenyl group which is optionally branched and/or optionally has a cycloalkyl group, a C₃-C₁₂ cycloalkyl group which is optionally substituted or a C₆-C₁₈ aryl group which is optionally substituted), which phenolic antioxidant is masked with an organic aluminum compound, to a catalyst system or polymerization system before or during said polymerization of said olefin-based monomer, in which polyolefin-based resin composition, said phenolic antioxidant represented by said Formula (I) is added in an amount of 0.001 to 0.5 parts by mass with respect to 100 parts by mass of said olefin-based monomer.

2. The polyolefin-based resin composition for use in food items, medical services and water service pipes according to claim 1, wherein said T in said Formula (I) is a C₁₂-C₂₄ alkyl group which is optionally branched.

3. The polyolefin-based resin composition for use in food items, medical services and water service pipes according to claim 1, wherein said organic aluminum compound is a trialkyl aluminum.

4. The polyolefin-based resin composition for use in food items, medical services and water service pipes according to claim 1, wherein catalyst for said polymerization of said olefin-based monomer is a transition metal catalyst.

5. The polyolefin-based resin composition for use in food items, medical services and water service pipes according to claim 4, wherein said catalyst for said polymerization of said olefin-based monomer is a Ziegler-Natta catalyst.

6. The polyolefin-based resin composition for use in food items, medical services and water service pipes according to claim 1, wherein the ratio of said phenolic antioxidant reflux-extracted using chloroform as solvent is not greater than 20% by mass with respect to the amount of said phenolic antioxidant blended in said resin.
